# EUROPEAN PATENT APPLICATION

(11) **EP 4 668 220 A1**
(43) Date of publication of application: **24.12.2025**
(21) Application number: 24183492.8
(22) Date of filing: 20.06.2024
(51) Int. Cl.: G06V 10/12, G06V 20/56, H04N 7/18, H04N 23/90

(54) **METHOD, CONTROLLER, CAMERA SYSTEM, AND COMPUTER PROGRAM FOR PROVIDING AN ELECTRONIC LOOKOUT FUNCTION FOR AN EGO VESSEL, EGO VESSEL AND COMPUTER-READABLE MEDIUM**

(71) Applicant: ABB Schweiz AG, 5400 Baden (CH)
(72) Inventor: TERVO, Kalevi, 00980 Helsinki (FI); PELTOLA, Jukka, 00980 Helsinki (FI)
(74) Representative: Sykora & König Patentanwälte PartG mbB

(57) **Abstract**

A method for providing an electronic lookout function for an ego vessel (30) is described. The method comprises: receiving first low-effective-resolution image data (LD1) from a first camera arrangement (12) of the ego vessel (30), wherein the first low-effective-resolution image data (LD1) are representative for a first low-effective-resolution image having a first effective resolution in horizontal direction and showing at least a part of a water surface surrounding the ego vessel (30) within a first wide circular sector (34) around the ego vessel (30), wherein the first wide circular sector (34) has a first central angle (36); receiving first high-effective-resolution image data (HD1) from a second camera arrangement (14) of the ego vessel (30), wherein the first high-effective-resolution image data (HD1) are representative for a first high-effective-resolution image having a second effective resolution larger in horizontal direction than the first resolution and showing at least a part of the water surface surrounding the ego vessel (30) within a first narrow circular sector (44) around the ego vessel (30), wherein the first narrow circular sector (44) is within the first wide circular sector (34) and wherein the first narrow circular sector (44) has a second central angle (46) smaller than the first central angle (36); checking whether there is any object on the water surface within the circular sectors (34, 44) depending on the low- and high-effective-resolution image data (LD1, HD1); and generating and outputting an object presence signal when an object is detected on the water surface within the circular sectors (34, 44).

## Description

### FIELD OF THE INVENTION

The invention relates to the field of maritime navigation and safety functions for vessels. In particular, the invention relates to a method, a controller, a camera system, and a computer program for providing an electronic lookout function for an ego vessel, to an ego vessel comprising the camera system, and to a computer-readable medium on which the computer program is stored.

### BACKGROUND OF THE INVENTION

In ship navigational decision making, a key function is the lookout. The task of the lookout is to detect anomalies from the environment (mainly visually) and communicate those to a navigator of the corresponding ego vessel. In order to automate any aspect of ship navigation, the lookout function needs to be implemented by means of technology. In practice, this means achieving equal or better performance in visual detection as a human lookout can achieve.

The best possible human visual detection performance can be abstracted to a resolution of 1 arcminute (as a commonly used resolution criterion) in horizontal direction. However, that applies only in a very narrow range around the corresponding point of fixation. Therefore, a performance definition of the human lookout may be assumed to be 2 arcminutes at maximum, e.g., as described in the whitepaper "Electronic lookout function for increased ship safety, Lookout requirements can be met by technology, supporting crews on board and increasing vessel safety" by Dr. Kalevi Tervo et al., ABB Marine & Ports. This assumption may be based on eyesight requirements in the Standards of Training, Certification and Watchkeeping for Seafarers (STCW) for the bridge crew.

On the other hand, having a camera-based detection arrangement achieving continuously 2 arcminute resolution in horizontal direction would require very special camera-optics setup resulting in overall system costs that would be intolerable with the existing technology.

In particular, in ship operation, it is very important to detect objects, in other words obstacles, on the water surface as far as possible and/or as early as possible. This gives more time to react in case the situation is considered risky. In order to reach reliable detection with a computer vision-based solution, the standard Detection Identification and Recognition (DRI) creation can be adopted. In practice, this criterion requires that the minimum projection of the object should be represented with 12,5 pixels horizontally arranged next to each other in an image, for a computer vision algorithm to detect it reliably, wherein such computer vision algorithm are well known in the art, e.g., as described in "A comprehensive review of object detection with deep learning" by Ravpreet Kaur and Sarbjeet Singh, Elsevier, Digital Signal Processing, Volume 132, January 2023, 103812; or in "Detectability of Objects at the Sea Surface in Visible Light and Thermal Camera Images" by Rodin and Johansen. In addition, achieving a resolution where a 2 arcminute sized object would be represented in the image with 12,5 pixels horizontally arranged next to each other, would require about 5 deg field of view (FOV) in horizontal direction from a Full HD camera. The Safety of Lives at Sea (SOLAS) requirement for a lookout requires 225 deg horizontal FOV. Achieving this with a Full HD camera would result in approximately 45 Full HD cameras or 23 4K-cameras to provide a continuous horizontal FOV as per the SOLAS requirement. Moreover, if the need is to monitor the full 360 deg, even more cameras would be needed. This would result in very high costs and complexity, and might be unnecessary, as even a human lookout cannot achieve the 2 arcminute resolution continuously. In fact, a deviation of 30 deg from the point of fixation in human eye already drops the resolution of the eye to 1/16 of the 2 arcminute.

So, the problem is that the current camera technology does not enable achieving a sufficiently wide field of view with a sufficiently high resolution with an acceptable amount of separate cameras and thereby with acceptable costs.

Therefore, it is an objective of the present invention to provide a method, a controller, a camera system, and a computer program for providing an electronic lookout function for an ego vessel, which enable to achieve equal or better look out performance as a human can achieve and/or which are simple and/or cost-effective. Further, it is an objective of the present invention to provide an ego vessel comprising the camera system, and a computer-readable medium on which the computer program is stored.

### DESCRIPTION OF THE INVENTION

This objective is achieved by the subject-matter of the independent claims. Further exemplary embodiments are evident from the dependent claims and the following description.

An aspect relates to a method for providing an electronic lookout function for an ego vessel. The method comprises: receiving first low-effective-resolution image data from a first camera arrangement of the ego vessel, wherein the first low-effective-resolution image data are representative for a first low-effective-resolution image having a first effective resolution in horizontal direction and showing at least a part of a water surface surrounding the ego vessel within a first wide circular sector around the ego vessel, wherein the first wide circular sector has a first central angle; receiving first high-effective-resolution image data from a second camera arrangement of the ego vessel, wherein the first high-effective-resolution image data are representative for a first high-effective-resolution image having a second effective resolution in horizontal direction larger than the first effective resolution in horizontal direction and showing at least a part of the water surface surrounding the ego vessel within a first narrow circular sector around the ego vessel, wherein the first narrow circular sector is within the first wide circular sector and wherein the first narrow circular sector has a second central angle smaller than the first central angle; checking whether there is any object on the water surface within the circular sectors depending on the low- and high-effective-resolution image data; and generating and outputting an object presence signal when an object is detected on the water surface within the circular sectors.

An aspect relates to a controller for providing the electronic lookout function for the ego vessel. The controller comprises a memory for storing the low-effective-resolution image data and the high-effective-resolution image data, and a processor communicatively coupled to the memory and being configured for carrying out the method as described above and in the following.

An aspect relates to a camera system for providing the electronic lookout function for the ego vessel. The camera system comprises: the first camera arrangement comprising a low-effective-resolution camera having the first resolution in the horizontal direction and a first field of view for capturing low-effective-resolution images and generating corresponding low-effective-resolution image data, with the low-effective-resolution images having the first effective resolution in horizontal direction and showing at least a part of the water surface surrounding the ego vessel within the first wide circular sector around the ego vessel, wherein the first wide circular sector has the first central angle corresponding to the first field of view; and the second camera arrangement comprising a high-effective-resolution camera having the second resolution in horizontal direction and a second field of view for capturing high-effective-resolution images and generating corresponding high-effective-resolution image data, with the high-effective-resolution images having the second effective resolution in horizontal direction and showing at least a part of the water surface surrounding the ego vessel within the first narrow circular sector around the ego vessel, wherein the first effective resolution in horizontal direction is smaller than the second effective resolution in horizontal direction, wherein the first field of view is larger than the second field of view, wherein the first narrow circular sector has a second central angle corresponding to the second field of view, wherein the second central angle is smaller than the first central angle, wherein the cameras are arranged such that the second field of view is within the first field of view; and the controller as described above and in the following, wherein the controller is communicatively coupled to the first and second camera arrangements.

An aspect relates to the ego vessel. The ego vessel comprises a hull for swimming on the waterbody; the camera system as described above and in the following and being arranged on the hull; and a safety system coupled to the camera system and being configured for providing at least one safety function of the ego vessel.

An aspect relates to a computer program for providing the electronic lookout function for the ego vessel, the computer program comprises computer-readable instructions which, when being executed by the processor of the controller as described above and in the following, carry out the method as described above and in the following.

An aspect relates to a computer-readable medium on which the computer program as described above and in the following is stored. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

The first camera arrangement may be used for monitoring an environment, in other words the surroundings, of the ego vessel within the first wide circular sector, wherein the first camera arrangement may comprise the low-effective-resolution camera having the wide field of view. The second camera arrangement enables to achieve the horizontal resolution required for substituting a human lookout, e.g. 2 arcminute, within the first narrow circular sector, wherein the high-effective-resolution camera of the second camera arrangement may have the narrow field of view. Optionally, the first camera arrangement may comprise two or more low-effective-resolution cameras, and/or the second camera arrangement may comprise two or more high-effective-resolution cameras. In case of more than one low-effective-resolution camera, the low-effective-resolution cameras may be arranged such that filed-of-views of the low-effective-resolution cameras overlap each other. The cameras each may be a HD- or 4k-camera. The image data may be provided as video streams comprising an amount of images from the corresponding cameras and may processed with known video/image processing methods to detect and/or track objects on the water surface and optionally to measure a bearing of the objects and/or a distance from the ego vessel to the objects, wherein the distance may be referred to as "range" in this context. The measurement of the range and the bearing may be based on monocular or stereo vision technology and is well-known in the art.

The high-effective-resolution mentioned in this description with respect to the images and/or cameras may be larger than the low-effective-resolution mentioned in the same context. The high-effective-resolution in horizontal direction is defined by the high-resolution in the horizontal direction divided by the small field of view. The low-effective-resolution in horizontal direction is defined by the low-resolution in the horizontal direction divided by the large field of view.

Unless otherwise stated, any field of view mentioned in this description refers to the horizontal direction and extends in horizontal direction. In case of the vertical field of view being meant, the term "vertical" or variations of these term are used.

The "effective resolution" mentioned in context with the images and cameras is defined in this description as the ratio of the size of the field of view of the corresponding camera with respect to an amount of pixels covering the corresponding field of view in the same direction. In particular, each of the cameras has its own optical sensor having an array of pixels arranged in lines and columns, wherein the lines are orientated horizontally, and the columns are orientated vertically. The low-effective-resolution camera has the first field of view and the pixels in each line of its optical sensor cover this first field of view. The number of the pixels in one of the lines divided by the first field of view defines the first effective resolution of the low-effective-resolution camera in horizontal direction. In contrast, the high-effective-resolution camera has the second field of view smaller than the first field of view and the pixels in each line of its optical sensor cover this second field of view. The number of the pixels in one of the lines divided by the second field of view defines the second effective resolution of the high-effective-resolution camera in horizontal direction. For example, when the number of pixels per line is the same for both cameras, the effective resolution of the low-effective-resolution camera is smaller than the effective resolution of the high-effective-resolution camera, because the first field of view is larger than the second field of view. So, the high-effective-resolution camera has more pixels in horizontal direction per arcminute field of view than the low-effective-resolution camera.

The same principle may be transferred to the low- and high-effective-resolution images. In particular, the high-effective-resolution images have more pixels in horizontal direction per arcminute field of view covered by the corresponding image than the low-effective-resolution image.

This principle may further be transferred to the vertical direction. In particular, there may be embodiments in which the effective resolution of the low-effective-resolution camera in vertical direction is smaller than the effective resolution of high-effective-resolution camera in vertical direction, wherein in this context the effective resolution refers to the ratio of the number of pixels per column divided by the vertical field of view of the camera. The same holds true for the low- and high-effective-resolution images. When the camera arrangements comprise such cameras, the inventive method described in detail in this description with respect to the horizontal effective resolution may be expanded to the vertical direction also. For example, in this context, only one low-effective-resolution camera and/or one low-effective-resolution image may be used for covering the surroundings of the ego vessel in vertical direction at least from the bow of the ego vessel to the horizon, whereas a moving or two or more high-effective-resolution cameras and/or two or more high-effective-resolution images may be used for covering the surroundings of the ego vessel in vertical direction at least from the bow of the ego vessel to the horizon, as explained in the following for the horizontal direction. Alternatively, the vertical effective resolution of all cameras and images may be the same or may be at least of less priority than the horizontal effective resolution, because the total interesting field of view in vertical direction may be in a range from 10 deg to 60 deg, e.g., from 15 deg to 30 deg, only, whereas the total interesting field of view in horizontal direction may be in a range from 225 deg to 360 deg, for example, and because this much smaller vertical field of view of interest may be covered with one high-effective-resolution camera only.

The water surface may be the upper surface of a waterbody. The waterbody may be the sea, a lake, or a river. The object may be any object swimming on the water surface or swimming within the water body and projecting from the water surface. The object may pose a hazard for the ego vessel. The object may be another vessel, land, a container, waste, and/or a buoy.

The circular sectors each may have a centre arranged within the ego vessel, e.g. at the first and/or second camera arrangement, or at a front tip of the ego vessel. Each of the circular sectors is described by its central angle. Each of the circular sectors lies within a horizontally oriented plane around the ego vessel. The wide circular sectors mentioned in this description are wider than the narrow circular sectors mentioned in this description. So, the central angles of the wide circular sectors are larger than the central angles of the narrow circular sectors. The central angles of the wide circular sectors, e.g. the first central angle, may be in a range from 10 deg to 360 deg, e.g. from 30 deg to 270 deg, e.g. from 90 deg to 180 deg. The central angles of the narrow circular sectors, e.g. the second central angle, may be in a range from 0.1 arcmin to 60 arcmin, e.g. from 1 arcmin to 10 arcmin, e.g. about 2 arcmin. The first central angle may be 10 or more times larger than the second central angle, e.g. 100 times or more, e.g. about 1000 times.

The high-effective-resolution mentioned in this description with respect to the images and/or cameras, e.g. the second effective resolution, may be larger than the low-effective-resolution mentioned in the same context, e.g. the first effective resolution. In particular, the second effective resolution in horizontal direction may be 10 or more times larger than the first resolution in horizontal direction, e.g. 100 times or more, e.g. about 1000 times. For example, the high resolution may be in a range between 2048 × 2048 and thereby 2048 in horizontal direction and 4096 × 4096 and thereby 4096 in horizontal direction, and/or the low resolution in horizontal direction may be in a range between 1080 × 1080 and thereby 1080 in horizontal direction and 1920 × 1920 and thereby 1920 in horizontal direction. In contrast, the resolution of the cameras and/or images may be the same and the differences of the effective resolutions may come from the different field of views only. It even might be possible that the resolution in horizontal direction of the low-effective-resolution camera and/or images is larger than the resolution in horizontal direction of the high-effective-resolution camera, as long as the effective resolution in horizontal direction of the low-effective-resolution camera and/or images is smaller than the effective resolution in horizontal direction of the high-effective-resolution camera.

The safety system may comprise the controller and/or a control unit of the ego vessel, wherein the controller may be a component of the control unit. The control unit may be configured for controlling the ego vessel in particular with respect to driving and steering the ego vessel. The control unit, as a component of the safety system, may be used for avoiding a collision with the detected object. For example, when an object is detected within the first and/or second circular sectors, the control unit may decelerate or stop the ego vessel to avoid a collision with the detected object. Alternatively or additionally, the safety system may comprise an output unit for outputting a warning signal to the crew of the ego vessel, when the object is detected within the first and/or second circular sectors. The output unit may comprise a display and/or a speaker.

The method may be carried out by the controller. The controller may be a part of the ego vessel. For example, the controller may be a component of the camera system comprising the first and second camera arrangements. When no object is detected on the water surface within the first and second circular sectors, the method may be terminated or started again by receiving second low-effective-resolution image data from the first camera arrangement or by receiving second high-effective-resolution image data from the second camera arrangement. Optionally, in this case, a clearance signal may be generated and outputted. For example, when no object is detected on the water surface within the first wide circular sector and the first narrow circular sector, the method may start again by keeping the first low-effective-resolution image data and by receiving second high-effective-resolution image data, as explained in the following.

According to an embodiment, the method comprises: sending a control signal to an actuator of the second camera arrangement after receiving the first high-effective-resolution image data, wherein the actuator is mechanically coupled to the high-effective-resolution camera of the second camera arrangement which generated the first high-effective-resolution image data, wherein the actuator is configured for rotating the high-effective-resolution camera around a vertical axis of rotation, and wherein the control signal and the actuator are configured such that the actuator rotates the high-effective-resolution camera around the vertical axis of rotation upon receiving the control signal; and receiving second high-effective-resolution image data from the high-effective-resolution camera of the second camera arrangement after the rotation of the high-effective-resolution camera, wherein the second high-effective-resolution image data are representative for a second high-effective-resolution image having the second resolution and showing at least a part of the water surface surrounding the ego vessel within a second narrow circular sector around the ego vessel, wherein the second narrow circular sector is within the first wide circular sector, wherein the second narrow circular sector has the second central angle, and wherein the second narrow circular sector is different from the first narrow circular sector, wherein it is checked whether there is any object on the water surface within the circular sectors depending on the low- and high-effective-resolution image data by checking whether there is any object on the water surface within the first wide circular sector and the second narrow circular sectors depending on the first low- and high-effective-resolution image data and the second high-effective-resolution image data.

So, the second camera arrangement may be configured such that the high-effective-resolution camera automatically captures high-effective-resolution images and generates corresponding high-effective-resolution image data after every rotation of the high-effective-resolution camera. Alternatively, the controller may be configured for sending a capturing signal to the high-effective-resolution camera after every rotation of the high-effective-resolution camera, wherein the capturing signal and the high-effective-resolution camera are configured such that the high-effective-resolution camera captures one of the high-effective-resolution images and generates corresponding high-effective-resolution image data after receiving the capturing signal.

The high-effective-resolution camera rotated by the actuator may be controllable and/or may be of a pan-tilt-zoom type. The actuator may rotate the high-effective-resolution camera such that the second narrow circular sector overlaps the first narrow circular sector. For example, the actuator may rotate the second camera about an angle between 1 arcminute and 1 degree, e.g. between 1.5 arcminutes and 30 arcminutes, e.g. between 2 arcminutes and 3 arcminutes. The control signal may be repeatedly sent at fixed time intervals, e.g. every 10 s, every 20 s, every 30 s, every 40 s, every 50 s, or once per minute.

With the at least one low-effective-resolution camera having the wide first field of view monitoring the first wide circular sector continuously with the low and/or first effective resolution in horizontal direction, and one or more of the high-effective-resolution cameras having the narrow second field of view monitoring the first, second and optionally more narrow circular sectors one after the other with the high and/or second effective resolution in horizontal direction an improved detection and classification of objects, in other words obstacles, can be provided, wherein such objects may not be reliably (or at all) detected by a conventional stationary camera setup.

In particular, the wide circular sector may be monitored continuously, whereas the narrow circular sectors to be monitored by the high-effective-resolution camera may be changed in a sequence/pattern so that the camera system gets an update from the desired narrow circular sectors, e.g. within constant time intervals. The camera system combining the wide field of view low-effective-resolution camera with the narrow field of view high-effective-resolution camera enables to detect targets nearby within the wide circular sector in real-time, whereas the objects which are further away and therefore more difficult to detect changes in their speed, direction and distance may be detected less frequently within the changing narrow circular sectors. For example, when an object is e.g. 6 km away from the ego vessel, it is very uncertain to estimate changes in the speed, bearing, or position of the object based on two different high-effective-resolution images captured by the high-effective-resolution camera one after the other after about 1 s. Therefore, it is acceptable to get updates regarding the objects far away from the narrow circular segments less frequently.

To achieve a continuous performance corresponding to the human lookout, where the target is 30 deg off from the point of fixation up to 225 deg around the forward sector, may be achieved by three Full HD-cameras or two 4K-cameras as the wide field of view low-effective-resolution cameras of the first camera arrangement, and the maximum 2 arcminute capability may be provided with one or more of the narrow field of view high-effective-resolution cameras, e.g. pan-tilt-zoom cameras, of the second camera arrangement. In case of more than one rotatable high-effective-resolution cameras, the high-effective-resolution cameras may be rotated with different speeds such that the information regarding some of the narrow circular segments may be updated more often than the information regarding others of the narrow circular segments. This may enable to get more frequent updates regarding objects which are moving faster than regarding objects which are moving slow.

According to an embodiment, the control signal is repeatedly sent to the actuator after receiving the corresponding high-effective-resolution image data from the corresponding high-effective-resolution camera such that the corresponding high-effective-resolution camera repeatedly captures high-effective-resolution images of further narrow circular sectors around the ego vessel within the first wide circular sector such that all of the narrow circular sectors cover the first wide circular sector after a predetermined amount of time. For example, after the predetermined amount of time, all of the narrow circular sectors may completely cover the first wide circular sector. The predetermined amount of time may depend on the time intervals at which the second camera is rotated and at which the second camera captures the high-effective-resolution images, and/or on the size of the first wide circular sector and the sizes of the narrow circular sectors. The smaller the time intervals are the smaller may be the predetermined amount of time. The smaller the first wide circular sector is the smaller may be the predetermined amount of time. The smaller the second circular sectors are the larger may be the predetermined amount of time. The predetermined amount of time may be in a range of 1 s to 120 s, e.g. of 10 s to 60 s, e.g. of about 30 s.

According to an embodiment, the method comprises: receiving second low-effective-resolution image data from the first camera arrangement after receiving the first low-effective-resolution image data, wherein the second low-effective-resolution image data are representative for a second low-effective-resolution image having the first effective resolution in horizontal direction and showing at least a part of the water surface surrounding the ego vessel within a second wide circular sector around the ego vessel, wherein the second wide circular sector is different from the first wide circular sector and wherein the second wide circular sector has a third central angle which is larger than the second central angle, wherein it is checked whether there is any object on the water surface within the circular sectors depending on the low- and high-effective-resolution image data by checking whether there is any object on the water surface within the first and second circular sectors depending on the first and second image data. The second wide circular sector may overlap the first wide circular sector.

The second low-effective-resolution image data may be generated by the same low-effective-resolution camera as the first low-effective-resolution image data. In this case, the low-effective-resolution camera may be rotated for capturing the second low-effective-resolution image represented by the second low-effective-resolution image data after capturing the first low-effective-resolution image represented by the first low-effective-resolution image data. Further in this case, the third central angle may correspond to the first central angle. Alternatively, the second low-effective-resolution image data may be generated by another low-effective-resolution camera of the first camera arrangement. In this case, the low-effective-resolution camera generating the first low-effective-resolution image data may be referred to as first low-effective-resolution camera and the low-effective-resolution camera generating the second low-effective-resolution image data may be referred to as second low-effective-resolution camera. This second low-effective-resolution camera may have the same resolution and/or an equally sized field of view as the first low-effective-resolution camera or another resolution and/or differently sized field of view as the first low-effective-resolution camera. Independent from the number of low-effective-resolution cameras of the first camera arrangement, the first camera arrangement may be configured such that the wide circular sectors together surround the ego vessel at about 225 deg or more, e.g. completely, i.e. at 360 deg.

According to an embodiment, after receiving the low- and high-effective-resolution image data, the method comprises fusing the low- and high-effective-resolution image data in a fused image data set, wherein it is checked whether there is any object on the water surface within the circular sectors depending on the low- and high-effective-resolution image data by checking whether there is any object on the water surface within the circular sectors depending on the fused image data set. So, the image data may be fused first and then it may be searched for the objects depending on the fused image data. Alternatively, it may be searched for the objects within the wide circular sector(s) and for the objects within the narrow circular sector(s) first, and then the results may be combined.

According to an embodiment, when the object is detected on the water surface within the circular sectors depending on the first low- and high-effective-resolution image data, the method comprises tracking the object over the second and any further high-effective-resolution images, as long as the obj ect is determined as not being on the water surface within the circular sectors anymore. In case of the second low-effective-resolution image data being received, the object may be tracked over the second and any further low-effective-resolution image data also. In general, the tracking of one or more detected objects may contribute to reduce noise. The noise may be caused by falls detections, e.g., waves. Alternatively or additionally, the tracking may enable to estimate a speed and/or course of the tracked object. Alternatively or additionally, the tracking may enable to maintain an identity of each detected object over time and/or may help to predict a future track of the detected object.

In general, tracking algorithms are algorithms which monitor a sequence of detections over time. Corresponding tracking methods are well known in the art, widely used in the field, and exemplarily described in "A review on real time object tracking in video sequences", by Shraddha V. Kothiya and Ms. Kinjal B. Mistree, 2015 International Conference on Electrical, Electronics, Signals, Communication and Optimization (EESCO), January 2015, DOI:10.1109/EESCO.2015.7253705, or in "Simple Online and Realtime Tracking", by Alex Bewley et al., presented at ICIP 2016, Computer Vision and Pattern Recognition, arXiv: 1602.00763, and references therein.

For example, when the object is detected on the water surface within the circular sectors, the object may be recorded as a target to be tracked on a list of targets. Then, each object detected afterwards may be compared to the targets on the list of targets and a probability that the object corresponds to one of the targets already listed may be determined. When the probability exceeds a predetermined threshold, the object is determined as one of the targets of the list. When the probability does not exceed the predetermined threshold, a new target representing the object may be recorded in the list. This may be repeated for every new image data received.

The tracking may be based on image coordinates of the corresponding images and/or on world coordinates. The corresponding coordinates may be recorded assigned to the object within the list of targets. When comparing the object with the targets already on the list, the coordinates of the object and of the targets may be taken into account and/or may be compared with each other.

The coordinates of the targets may change a little bit from image to image because of a motion of the object and/or because of a motion of the ego vessel. The speed and/or direction or heading of the target may be determined from the changing coordinates.

Whether the detected object, in this context one of the targets, is determined as being on the water surface within the circular sectors anymore or not may also be based on an estimation. If a likelihood that the target is still present on the water surface approaches zero, the target may be determined as not being on the water surface within the circular sectors anymore. Alternatively, the target may be determined as not being on the water surface within the circular sectors anymore, when the corresponding object is not detected anymore over a predetermined amount of time and/or over a predetermined amount of images.

The tracking of the objects/targets may be done in different orders with respect to the other steps of the method for providing the electronic lookout function for the ego vessel. For example, the image data may be fused at first, then the object may be detected from the fused image data, and then the detected object may be tracked over several images. Alternatively, the object may be detected in different images at first, then the detection results may be combined, and then the objects may be tracked from the combined detection results. Alternatively, the object may be detected at first, then the detected object may be tracked over several images, and then tracking results may be fused.

According to an embodiment, the camera system comprises the actuator mechanically coupled to the high-effective-resolution camera and being configured for rotating the high-effective-resolution camera around the vertical axis of rotation upon receiving the corresponding control signal from the controller.

It has to be understood that some features, advantages and/or embodiments of the invention may be described with respect to one of the above objects only. However, these features, advantages and/or embodiments may be easily transferred to some of the other aspects.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 shows an exemplary embodiment of a camera system;
Fig. 2 shows an exemplary embodiment of an ego vessel comprising the camera system of Fig. 1; and
Fig. 3 shows a flow diagram of an exemplary embodiment of a method for providing an electronic lookout function for the ego vessel of figure 2.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

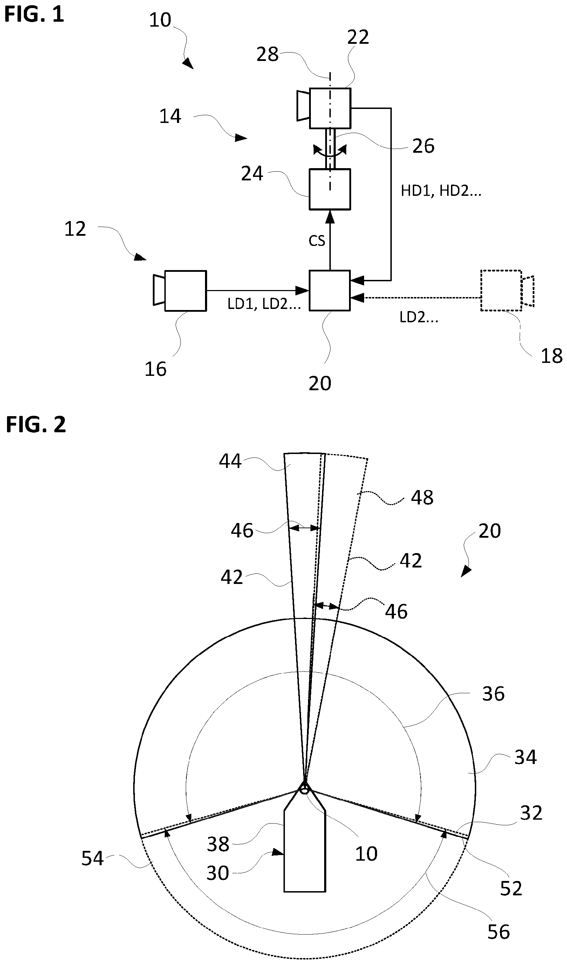

Fig.1 shows an exemplary embodiment of a camera system 10. The camera system 10 is configured for providing an electronic lookout function for an ego vessel 30 (see figure 2) sailing on a water surface of a waterbody. The camera system 10 comprises a first camera arrangement 12, a second camera arrangement 14, and a controller 20.

The first camera arrangement 12 comprises at least one low-effective-resolution camera, e.g. a first low-effective-resolution camera 16, having a first effective resolution, in particular in horizontal direction, and a first field of view 32 (see figure 2) for capturing low-effective-resolution images and generating corresponding low-effective-resolution image data LD1, LD2. The second camera arrangement 14 comprises at least one high-effective-resolution camera, e.g. a first high-effective-resolution camera 22, having a second effective resolution, in particular in horizontal direction, and a second field of view 42 (see figure 2) for capturing high-effective-resolution images and generating corresponding high-effective-resolution image data HD1, HD2. The first effective resolution is smaller than the second effective resolution, in particular in horizontal direction. The first field of view 32 is larger than the second field of view 42. The first cameras 16, 22 are arranged such that the second field of view 42 is within the first field of view 32.

The "effective resolution" mentioned in context with the images and cameras is defined in this description as the ratio of the size of the field of view of the corresponding camera with respect to an amount of pixels covering the corresponding field of view in the same direction. In general, any "high-effective-resolution" mentioned in this description with respect to the images and/or cameras 16, 18, e.g. the second effective resolution, is larger than the "low-effective-resolution" mentioned in the same context, e.g. the first effective resolution. In particular, the second effective resolution in horizontal direction may be 10 or more times larger than the first effective resolution in horizontal direction, e.g. 100 times or more, e.g. about 1000 times. For example, a high resolution for providing the high effective resolution may be in a range between 2048 × 2048 and 4096 × 4096, and/or a low resolution for providing the low effective resolution may be in a range between 1080 × 1080 and 1920 × 1920. However, the resolution for providing the high effective resolution may be the same or even smaller than the low effective resolution, as long as the high effective resolution is larger than the low effective resolution. An angle of a wide field of view, e.g., the first field of view, may be in a range from 10 deg to 360 deg, e.g. from 30 deg to 270 deg, e.g. from 90 deg to 180 deg. An angle of the narrow field of view, e.g., the second field of view, may be in a range from 0.1 arcmin to 60 arcmin, e.g. from 1 arcmin to 10 arcmin, e.g. about 2 arcmin.

Optionally, the first camera arrangement 12 may comprise one or more further low-effective-resolution cameras, e.g. a second low-effective-resolution camera 18. The second low-effective-resolution camera 18 may have the same resolution, in particular in horizontal direction, as the first low-effective-resolution camera 18. Alternatively, the second low-effective-resolution camera 18 may have another resolution in horizontal direction as the first low-effective-resolution camera 18, wherein an effective resolution of the second low-effective-resolution camera 18 is smaller than the second effective resolution, at least in horizontal direction. A size of a field of view of the second low-effective-resolution camera 18 may correspond to a size of the first field of view 32. Alternatively, the size of the field of view of the second low-effective-resolution camera 18 may differ from the size of the first field of view 32, as exemplarily shown in figure 2. For example, the second low-effective-resolution camera 18 may have a third field of view 52. The low-effective-resolution cameras 16, 18 may be arranged such that their field of views 32, 52 overlap each other. Optionally, the low-effective-resolution cameras 16, 18 of the first camera arrangement 12 may be configured for providing at least a 225 deg, e.g. a 360 deg field of view around the ego vessel 30, e.g. by providing appropriate and/or sufficient low-effective-resolution cameras 16, 18 and by arranging them accordingly or by rotating one or both of the low-effective-resolution cameras 16, 18.

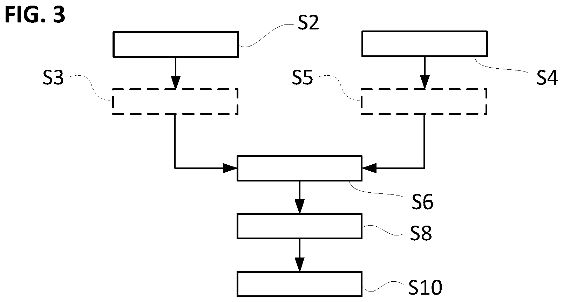

The controller 20 is communicatively coupled to the first and second camera arrangements 14, 16, in particular to the first cameras 16, 22. The controller 20 may be configured for providing the electronic lookout function for the ego vessel 30. In particular, the controller 20 may be configured for receiving the low-effective-resolution image data LD1, LD2 and the high-effective-resolution image data HD1, HD2 from the corresponding camera arrangements 12, 14, for checking whether there is any object on the water surface depending on the image data LD1, LD2, HD1, HD2, and for generating and outputting a waring signal in case of an object being detected on the water surface. The controller 20 may be further configured to send one or more capturing signals to the one or more of the cameras 16, 18, 22, wherein the capturing signal and the corresponding cameras 16, 18, 22 may be configured such that the corresponding cameras 16, 18, 22 capture corresponding images upon receiving the corresponding capturing signal. The controller 20 comprises a memory (not shown) for storing the low-effective-resolution image data LD1, LD2 and the high-effective-resolution image data HD1, HD2, and a processor (not shown) communicatively coupled to the memory and being configured for carrying out the method as described with respect to figure 3.

The camera system 10 may comprise an actuator 24 mechanically coupled to the first high-effective-resolution camera 22. The actuator 24 may be configured for rotating the first high-effective-resolution camera 22 around a vertical axis of rotation 28 upon receiving a corresponding control signal CS from the controller 20. The actuator 24 may be mechanically coupled to the first high-effective-resolution camera 22 by a rotatable shaft 26. For example, the vertical axis of rotation 28 may be a symmetry axis of the shaft 26 and/or the shaft 26 may be rotatable around the vertical axis of rotation via the actuator 24.

Fig. 2 shows an exemplary embodiment of the ego vessel 30 comprising the camera system 10 of Fig. 1. The ego vessel 30 sails on a water surface (not shown). The water surface may be the upper surface of a waterbody (not shown). The waterbody may be the sea, a lake, or a river. The ego vessel 30 comprises a hull 38 for swimming on the waterbody. The ego vessel 30 comprises a safety system coupled to the camera system 10. The safety system is configured for providing at least one safety function of the ego vessel 30.

The low-effective-resolution images captured by the first camera arrangement 12, e.g. by the first low-effective-resolution camera 16, have the first effective resolution corresponding to the first effective resolution of the first low-effective-resolution camera 16. The low-effective-resolution images show at least a part of the water surface surrounding the ego vessel 30 within a first wide circular sector 34 around the ego vessel 30. The first wide circular 34 sector has a first central angle 36 corresponding to the first field of view 32 of the first low-effective-resolution camera 16. In case of the first camera arrangement 12 comprising the second low-effective-resolution camera 18, the second low-effective-resolution camera 18 may be configured for capturing further low-effective-resolution images and for generating corresponding further low-effective-resolution images. These further low-effective-resolution images may show at least a part of the water surface surrounding the ego vessel 30 within a second wide circular sector 54 around the ego vessel 30. The second wide circular sector 54 may have a third central angle 56 corresponding to a third field of view 52 of the second low-effective-resolution camera 18. Alternatively, the low-effective-resolution cameras 16, 18 and optionally one or more further low-effective-resolution cameras (not shown) may be configured to monitor the first wide circular sector 34 together, wherein in this case the wide field of views of the low-effective-resolution cameras 16, 18 may overlap each other and may cover the first wide circular sector 34 and/or the surroundings of the ego vessel 30 completely.

The high-effective-resolution images captured by the second camera arrangement 14, e.g. by the first high-effective-resolution camera 22, have the second effective resolution corresponding to the second effective resolution of the first high-effective-resolution camera 22. The high-effective-resolution images show at least a part of the water surface surrounding the ego vessel 30 within a first narrow circular sector 44 around the ego vessel 30. The first narrow circular sector 44 has a second central angle 46 corresponding to the second field of view 42 of the first high-effective-resolution camera 22. The second central angle 46 is smaller than the first central angle 36 and the third central angle 56.

The circular sectors 34, 44, 54 each may have a centre arranged within the ego vessel 30, e.g. at the first and/or second camera arrangement 12, 14, or at a front tip of the ego vessel 30. Each of the circular sectors 34, 44, 54 is described by its centre and its central angle 36, 46, 56. The wide circular sectors 34, 54 mentioned in this description are wider than the narrow circular sectors 44 mentioned in this description. So, the central angles 36, 56 of the wide circular sectors 34, 54 are larger than the central angles 46 of the narrow circular sectors 44. The central angles 36, 56 of the wide circular sectors 34, 54, e.g. the first central angle 36, may be in a range from 10 deg to 360 deg, e.g. from 30 deg to 270 deg, e.g. from 90 deg to 180 deg, in correspondence with the wide field of views. The central angles 46 of the narrow circular sectors 44, e.g. the second central angle 46, may be in a range from 0.1 arcmin to 60 arcmin, e.g. from 1 arcmin to 10 arcmin, e.g. about 2 arcmin, , in correspondence with the narrow field of views. The first central angle 36 may be 10 or more times larger than the second central angle 46, e.g. 100 times or more, e.g. about 1000 times.

The actuator 24 may rotate the high-effective-resolution camera 22 such that a second narrow circular sector 48 is within the field of view 42 of the high-effective-resolution camera 22. Then, the high-effective-resolution camera 22 may capture a high-effective-resolution image of the second narrow circular sector 48 and may generate corresponding second high-effective-resolution image data HD2. Optionally, the actuator 24 and the high-effective-resolution camera 22 may be configured such that the second narrow circular sector 48 overlaps the first narrow circular sector 44. The actuator 24 may rotate the high-effective-resolution camera 22 about an angle between 1 arcminute and 1 degree, e.g. between 1.5 arcminutes and 30 arcminutes, e.g. between 2 arcminutes and 3 arcminutes.

A very good, in particular reliable and accurate, detection and classification of the objects, in other words obstacles, is provided by the first low-effective-resolution camera 16 having the wide first field of view 32 and optionally with the second low-effective-resolution camera 18 having the wide third field of view 52 monitoring the first wide circular sector 34 and, respectively, the second wide circular sector 54 continuously with the low and/or first effective resolution, and with one or more of the high-effective-resolution cameras 22 each having the narrow second field of view 42 monitoring the first, second and optionally more narrow circular sectors 44, 48 one after the other.

In particular, the wide circular sectors 34, 54 may be monitored continuously, whereas the narrow circular sectors 44, 48 to be monitored by the high-effective-resolution camera 22 may be changed in a sequence/pattern so that the camera system 10 gets an update from the desired narrow circular sectors 44, 48, e.g. within constant time intervals. The camera system 10 combining the wide field of view low-effective-resolution camera(s) 16, 18 with the narrow field of view high-effective-resolution camera(s) 22 enables to detect objects nearby on the water surface within the wide circular sector(s) 34, 54 in real-time, whereas the objects which are further away and therefore more difficult to detect changes in their speed, direction and distance may be detected less frequently within the changing narrow circular sectors 44, 48.

The ego vessel 30 may comprise a control unit (not shown). The control unit may be configured for controlling the ego vessel 30 in particular with respect to driving and steering the ego vessel 30. The safety system may comprise the controller 20 and/or the control unit of the ego vessel 30, wherein the controller 20 may be a component of the control unit. Alternatively, the safety system may be communicatively coupled to the controller 30. The controller 20 and/or the control unit, as a component of the safety system, may be used for avoiding a collision with the detected object. For example, when an object is detected within the circular sectors 34, 44, 54, the control unit may decelerate or stop the ego vessel 30 to avoid a collision with the detected object. Alternatively or additionally, the safety system may comprise an output unit (not shown) for outputting a warning signal to a crew of the ego vessel 30, when the object is detected within the circular sectors 34, 44, 54. The output unit may comprise a display and/or a speaker.

Fig. 3 shows a flow diagram of an exemplary embodiment of a method for providing an electronic lookout function for the ego vessel 30 of figure 2. The method may be carried out by the controller 20. The controller 20 may be a part of the ego vessel 30. For example, the controller 20 may be a component of the camera system 10 comprising the first and second camera arrangements 12, 14, as described above.

In a step S2, the first low-effective-resolution image data LD1 may be received, e.g. by the controller 20, from the first camera arrangement 12 of the ego vessel 30. The first low-effective-resolution image data LD1 are representative for the first low-effective-resolution image having the first effective resolution and showing at least a part of the water surface surrounding the ego vessel 30 within the first wide circular sector 34 around the ego vessel 30.

In an optional step S3, the second low-effective-resolution image data LD2 may be received, e.g. by the controller 20, from the first camera arrangement 12 after receiving the first low-effective-resolution image data LD1. The second low-effective-resolution image data LD2 may be representative for a second low-effective-resolution image having the first effective resolution or a third effective resolution smaller than the second effective resolution. The second low-effective-resolution image may show at least a part of the water surface surrounding the ego vessel 30, e.g. within the second wide circular sector 54 around the ego vessel 30. The second low-effective-resolution image data LD2 may be generated by the same low-effective-resolution camera as the first low-effective-resolution image data LD1, i.e. the first low-effective-resolution camera 16. In this case, the first low-effective-resolution camera 16 may be rotated for capturing the second low-effective-resolution image represented by the second low-effective-resolution image data LD2 after capturing the first low-effective-resolution image represented by the first low-effective-resolution image data LD1. Further, in this case, the third central angle 56 may correspond to the first central angle 36. Alternatively, the second low-effective-resolution image data LD2 may be generated by another low-effective-resolution camera of the first camera arrangement 12, e.g. the second low-effective-resolution camera 18. This second low-effective-resolution camera 18 may have the same effective resolution in horizontal direction and/or an equally sized field of view as the first low-effective-resolution camera 16. Independent from the number of low-effective-resolution cameras 16, 18 of the first camera arrangement 12, the first camera arrangement 12 may be configured such that the wide circular sectors 34, 54 together surround the ego vessel 30 completely, i.e. at 360 deg.

In a step S4, the first high-effective-resolution image data HD1 may be received, e.g. by the controller 20, from the second camera arrangement 16 of the ego vessel 30. The first high-effective-resolution image data HD1 are representative for the first high-effective-resolution image having the second effective resolution larger than the first effective resolution and showing at least a part of the water surface surrounding the ego vessel 30 within the first narrow circular sector 44 around the ego vessel 30. The first narrow circular sector 44 is within the first wide circular sector 34 and the first narrow circular sector 44 has the second central angle 46 smaller than the first central angle 36.

In an optional step S5, the control signal CS may be sent, e.g. from the controller 20, to the actuator 24 of the second camera arrangement 14 after receiving the first high-effective-resolution image data HD1. The actuator 24 may be configured for rotating the high-effective-resolution camera 22 around the vertical axis of rotation 28. The control signal CS and the actuator 24 may be configured such that the actuator 24 rotates the high-effective-resolution camera 22 around the vertical axis of rotation 28 upon receiving the control signal CS. Then, step S4 may be repeated by receiving second high-effective-resolution image data HD2 from the high-effective-resolution camera 22 of the second camera arrangement 14 after the rotation of the high-effective-resolution camera 22. The second high-effective-resolution image data HD2 may be representative for the second high-effective-resolution image having the second effective resolution and showing at least a part of the water surface surrounding the ego vessel 30 within the second narrow circular sector 48 around the ego vessel 30, wherein the second narrow circular sector 48 is different from the first narrow circular sector 44.

Optionally, the control signal CS may be repeatedly sent to the actuator 24 after receiving the corresponding high-effective-resolution image data HD1, HD2 from the corresponding high-effective-resolution camera 22 such that the corresponding high-effective-resolution camera 22 repeatedly captures high-effective-resolution images of further narrow circular sectors 44, 48 around the ego vessel 30 within the first wide circular sector 34 such that all of the narrow circular sectors 44, 48 cover the first wide circular sector 34 after a predetermined amount of time. For example, the control signal CS may be repeatedly sent at fixed time intervals, e.g. every 10 s, every 20 s, every 30 s, every 40 s, every 50 s, or once per minute such that steps S4 and S5 are carried out repeatedly at the same intervals, wherein, after the predetermined amount of time, all of the narrow circular sectors 44, 48 may completely cover the first wide circular sector 32 and, in case, the second wide circular sector 54.

The predetermined amount of time may depend on the time intervals at which the high-effective-resolution camera 22 is rotated and at which the high-effective-resolution camera 22 captures the high-effective-resolution images, and/or on the size of the wide circular sector(s) 34, 54 and the sizes of the narrow circular sectors 44, 48. The smaller the time intervals are the smaller may be the predetermined amount of time. The smaller the wide circular sector(s) 34, 54 is(are) the smaller may be the predetermined amount of time. The smaller the narrow circular sectors 44, 48 are the larger may be the predetermined amount of time. The predetermined amount of time may be in a range of 1 s to 120 s, e.g. of 10 s to 60 s, e.g. of about 30 s.

So, the controller 20 may be configured for sending a capturing signal to the high-effective-resolution camera 22 after every rotation of the high-effective-resolution camera 22, wherein the capturing signal and the high-effective-resolution camera 22 are configured such that the high-effective-resolution camera 22 captures high-effective-resolution images and generates corresponding high-effective-resolution image data HD1, HD2 every time upon receiving the capturing signal. Alternatively, the second camera arrangement 14 may be configured such that the high-effective-resolution camera 22 automatically captures high-effective-resolution images and generates corresponding high-effective-resolution image data HD1, HD2 after every rotation of the high-effective-resolution camera 22.

In a step S6, the received low- and high-effective-resolution image data LD1, LD2, HD1, HD2 may be fused, e.g. by the controller 20, in a fused image data set. For example, the low- and high-effective-resolution image data LD1, LD2, HD1, HD2 may be copied in the fused image data set.

In a step S8, it may be checked whether there is any object on the water surface within the circular sectors 34, 44, 54 depending on the fused image data set, in particular depending on the low- and high-effective-resolution image data LD1, LD2, HD1, HD2. The object may be any object swimming on the water surface or swimming within the water body and projecting from the water surface. The object may pose a hazard for the ego vessel 30. The object may be another vessel, land, a container, waste, and/or a buoy.

So, the image data LD1, LD2, HD1, HD2 may be fused first and then it may be searched for the objects depending on the fused image data. Alternatively, it may be searched for the objects within the wide circular sector(s) 34, 54 and for the objects within the narrow circular sector(s) 44, 48 first, and then the results, i.e. whether any object is present in the corresponding circular sectors 34, 54, 44, 48, may be combined. In this case, step S6 may be omitted and step S8 may be carried out twice, i.e. once with respect to the low-effective-resolution images and once with respect to the high-effective-resolution images.

In a step S10, an object presence signal may be generated, e.g. by the controller 20, when an object is detected on the water surface within one or more of the circular sectors 34, 44, 54. Further, in step S10, the object presence signal may be sent to an output unit of the ego vessel 30.

When no object is detected on the water surface within the circular sectors 34, 44, 54, 48 the method may be terminated or started again by receiving the second low-effective-resolution image data LD2 from the first camera arrangement 12 or by receiving the second high-effective-resolution image data HD2 from the second camera arrangement 14. Optionally, in this case, a clearance signal may be generated and outputted. For example, when no object is detected on the water surface within the first wide circular sector 34 and the first narrow circular sector 44, the method may start again by keeping the first low-effective-resolution image data LD1 and by receiving second high-effective-resolution image data HD2.

Optionally, when the object is detected on the water surface within the circular sectors depending on the first low- and high-effective-resolution image data, the method may comprise a tracking of the detected object over the second and any further high-effective-resolution images, as long as the obj ect is determined as not being on the water surface within the circular sectors anymore. In case of the second low-effective-resolution image data being received, the object may be tracked over the second and any further low-effective-resolution image data also. Corresponding tracking methods are well known in the art, widely used in the field, and exemplarily described in the references cited above.

Whether the detected object, in this context referred to as target, is determined as being on the water surface within the circular sectors anymore or not may be based on an estimation. If a likelihood that the target is still present on the water surface approaches zero, the target may be determined as not being on the water surface within the circular sectors anymore. Alternatively, the target may be determined as not being on the water surface within the circular sectors anymore, when the corresponding object is not detected anymore over a predetermined amount of time and/or over a predetermined amount of images.

The tracking of the objects/targets may be done in different orders with respect to the other steps of the method for providing the electronic lookout function for the ego vessel. For example, the image data may be fused at first, then the object may be detected from the fused image data, and then the detected object may be tracked over several images. Alternatively, the object may be detected in different images at first, then the detection results may be combined, in other words fused, and then the objects may be tracked from the combined detection results. Alternatively, the object may be detected at first, then the detected object may be tracked over several images, and then tracking results may be fused.

A continuous performance corresponding to the human lookout, where the target is 30 deg off from the point of fixation up to 225 deg around the forward sector, may be achieved by three Full HD-cameras or two 4K-cameras as the wide field of view low-effective-resolution cameras 16, 18 of the first camera arrangement 12, and the maximum 2 arcminute capability may be provided with one or more of the narrow field of view high-effective-resolution cameras 22, e.g. pan-tilt-zoom cameras, of the second camera arrangement 14. Instead of covering 225 deg around the forward sector, down to 180 deg only or up to 360 deg max may be covered by the wide field of view low-effective-resolution cameras 16, 18 of the first camera arrangement 12, wherein intermediate angles between 180 deg and 360 deg may also be possible.

In case of more than one rotatable high-effective-resolution cameras 22, the high-effective-resolution cameras 22 may be rotated with different speeds such that the information regarding some of the narrow circular sectors 44, 48 may be updated more often than the information regarding others of the narrow circular segments 44, 48. This may enable to get more frequent updates regarding objects which are moving faster than regarding objects which are moving slow.

A computer program may contribute to provide the electronic lookout function for the ego vessel 30. The computer program may comprise computer-readable instructions which, when being executed by the processor of the controller 20, carry out the method as described above. The computer program may be stored on a computer-readable medium. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: camera system
- 12: first camera arrangement
- 14: second camera arrangement
- 16: first low-effective-resolution camera
- 18: second low-effective-resolution camera
- 20: controller
- 22: high-effective-resolution camera
- 24: actuator
- 26: shaft
- 28: vertical axis of rotation
- 30: ego vessel
- 32: first field of view
- 34: first wide circular sector
- 36: first central angle
- 38: hull
- 42: second field of view
- 44: first narrow circular sector
- 46: second central angle
- 48: second narrow circular sector
- 52: third field of view
- 54: second wide circular sector
- 56: third central angle

- LD1: first low-effective-resolution image data
- LD2: second low-effective-resolution image data
- HD1: first high-effective-resolution image data
- HD2: second high-effective-resolution image data
- CS: control signal
- S2-S10: steps two to ten

## Claims

1. Method for providing an electronic lookout function for an ego vessel (30), the method comprising:
receiving first low-effective-resolution image data (LD1) from a first camera arrangement (12) of the ego vessel (30), wherein the first low-effective-resolution image data (LD1) are representative for a first low-effective-resolution image having a first effective resolution in horizontal direction and showing at least a part of a water surface surrounding the ego vessel (30) within a first wide circular sector (34) around the ego vessel (30), wherein the first wide circular sector (34) has a first central angle (36);
receiving first high-effective-resolution image data (HD1) from a second camera arrangement (14) of the ego vessel (30), wherein the first high-effective-resolution image data (HD1) are representative for a first high-effective-resolution image having a second effective resolution in horizontal direction larger than the first effective resolution in horizontal direction and showing at least a part of the water surface surrounding the ego vessel (30) within a first narrow circular sector (44) around the ego vessel (30), wherein the first narrow circular sector (44) is within the first wide circular sector (34) and wherein the first narrow circular sector (44) has a second central angle (46) smaller than the first central angle (36);
checking whether there is any object on the water surface within the circular sectors (34, 44) depending on the low- and high-effective-resolution image data (LD1, HD1); and
generating and outputting an object presence signal when an object is detected on the water surface within the circular sectors (34, 44).

2. Method in accordance with claim 1, the method comprising:
sending a control signal (CS) to an actuator (24) of the second camera arrangement (14) after receiving the first high-effective-resolution image data (HD1), wherein the actuator (24) is mechanically coupled to a high-effective-resolution camera (22) of the second camera arrangement (14) which generated the first high-effective-resolution image data (HD1), wherein the actuator (24) is configured for rotating the high-effective-resolution camera (22) around a vertical axis of rotation (28), and wherein the control signal (CS) and the actuator (24) are configured such that the actuator (24) rotates the high-effective-resolution camera (22) around the vertical axis of rotation (28) upon receiving the control signal (CS); and
receiving second high-effective-resolution image data (HD2) from the high-effective-resolution camera (22) of the second camera arrangement (14) after the rotation of the high-effective-resolution camera (22), wherein the second high-effective-resolution image data (HD2) are representative for a second high-effective-resolution image having the second effective resolution in horizontal direction and showing at least a part of the water surface surrounding the ego vessel (30) within a second narrow circular sector (48) around the ego vessel (30), wherein the second narrow circular sector (48) is within the first wide circular sector (34), wherein the second narrow circular sector (48) has the second central angle (46), and wherein the second narrow circular sector (48) is different from the first narrow circular sector (44), wherein
it is checked whether there is any object on the water surface within the circular sectors (34, 44, 48) depending on the low- and high-effective-resolution image data (LD1, HD1, HD2) by checking whether there is any object on the water surface within the first wide circular sector (34) and the second narrow circular sectors (44, 48) depending on the first low- and high-effective-resolution image data (LD1, HD1) and the second high-effective-resolution image data (HD2).

3. Method in accordance with claim 2, wherein
the control signal (CS) is repeatedly sent to the actuator (24) after receiving the corresponding high-effective-resolution image data (HD1, HD2) from the high-effective-resolution camera (22) such that the high-effective-resolution camera (22) repeatedly captures high-effective-resolution images of further narrow circular sectors around the ego vessel (30) within the first wide circular sector (34) such that all of the narrow circular sectors (44, 48) cover the first wide circular sector (34) after a predetermined amount of time.

4. Method in accordance with one of the preceding claims, the method comprising:
receiving second low-effective-resolution image data (LD2) from the first camera arrangement (12) after receiving the first low-effective-resolution image data (LD1), wherein the second low-effective-resolution image data (LD2) are representative for a second low-effective-resolution image having the first effective resolution in horizontal direction and showing at least a part of the water surface surrounding the ego vessel (30) within a second wide circular sector (50) around the ego vessel (30), wherein the second wide circular sector (50) is different from the first wide circular sector (34) and wherein the second wide circular sector (50) has a third central angle which is larger than the second central angle (46), wherein
it is checked whether there is any object on the water surface within the circular sectors (34, 50, 44, 48) depending on the low- and high-effective-resolution image (LD1, LD2, HD1, HD2) data by checking whether there is any object on the water surface within the first and second circular sectors (34, 50, 44, 48) depending on the first and second image data.

5. Method in accordance with one of the preceding claims, after receiving the low- and high-effective-resolution image data (LD1, LD2, HD1, HD2), the method comprising:
fusing the low- and high-effective-resolution image data (LD1, LD2, HD1, HD2) in a fused image data set, wherein it is checked whether there is any object on the water surface within the circular sectors (34, 50, 44, 48) depending on the low- and high-effective-resolution image data (LD1, LD2, HD1, HD2) by checking whether there is any object on the water surface within the circular sectors (34, 50, 44, 48) depending on the fused image data set.

6. Method in accordance with one of claims 2 to 5, when the object is detected on the water surface within the circular sectors (34, 44) depending on the first low- and high-effective-resolution image data (LD1, HD1) the method comprising:
tracking the object over the second and any further high-effective-resolution images (HD2), as long as the object is determined as not being on the water surface within the circular sectors (34, 44) anymore.

7. Controller (20) for providing an electronic lookout function for an ego vessel (30), the controller (20) comprising:
a memory for storing low-effective-resolution image data (LD1, LD2) and high-effective-resolution image data (HD1, HD2);
a processor communicatively coupled to the memory and being configured for carrying out the method in accordance with one of the preceding claims.

8. Camera system (10) for providing an electronic lookout function for an ego vessel (30), the camera system (10) comprising:
a first camera arrangement (12) comprising a low-effective-resolution camera (16, 18) having a first effective resolution in horizontal direction and a first field of view (32) for capturing low-effective-resolution images and generating corresponding low-effective-resolution image data (LD1, LD2), with the low-effective-resolution images having the first effective resolution in horizontal direction and showing at least a part of a water surface surrounding the ego vessel (30) within a first wide circular sector (34) around the ego vessel (30), wherein the first wide circular sector (34) has a first central angle (36) corresponding to the first field of view (32); and
a second camera arrangement (14) comprising a high-effective-resolution camera (22) having a second effective resolution in horizontal direction and a second field of view (42) for capturing high-effective-resolution images and generating corresponding high-effective-resolution image data (HD1, HD2), with the high-effective-resolution images having the second effective resolution in horizontal direction and showing at least a part of the water surface surrounding the ego vessel (30) within a first narrow circular sector (44) around the ego vessel (30), wherein the first effective resolution is smaller than the second effective resolution, wherein the first field of view (32) is larger than the second field of view, wherein the first narrow circular sector (44) has a second central angle (46) corresponding to the second field of view (42), wherein the second central angle (46) is smaller than the first central angle (36), wherein the cameras (16, 18, 22) are arranged such that the second field of view (42) is within the first field of view (32); and
a controller (20) in accordance with claim 6, wherein the controller (20) is communicatively coupled to the first and second camera arrangements (14, 16).

9. Camera system (10) according to claim 8, comprising:
an actuator (24) mechanically coupled to the high-effective-resolution camera (22) and being configured for rotating the high-effective-resolution camera (22) around a vertical axis of rotation (28) upon receiving a corresponding control signal (CS) from the controller (20).

10. Ego vessel (30), comprising:
a hull (38) for swimming on a waterbody;
a camera system (10) in accordance with one of claims 8 or 9 and being arranged on the hull (38); and
a safety system coupled to the camera system (10) and being configured for providing at least one safety function of the ego vessel (30).

11. Computer program for providing an electronic lookout function for an ego vessel (30), the computer program comprising computer-readable instructions which, when being executed by a processor of a controller (20) according to claim 6, carry out the method in accordance with one of claims 1 to 6.

12. Computer-readable medium on which a computer program according to claim 11 is stored.
